Europäisches Patentamt

European Patent Office

Office européen des brevets

(11) Publication number: **0 336 195**
**A2**

(12) **EUROPEAN PATENT APPLICATION**

(21) Application number: 89104979.3

(22) Date of filing: 20.03.89

(51) Int. Cl.⁴: **C08L 69/00 , C08K 5/02 ,**
**//(C08L69/00,67:00,25:18)**

(30) Priority: 30.03.88 NL 8800799

(43) Date of publication of application:
11.10.89 Bulletin 89/41

(84) Designated Contracting States:
DE ES FR GB IT NL

(71) Applicant: GENERAL ELECTRIC COMPANY
1 River Road
Schenectady New York 12151(US)

(72) Inventor: Roovers, Wilhelmus Marinus Maria
General Electric Plastics B.V. P.O. Box 117
NL-4600 AC Bergen op Zoom(NL)

(74) Representative: Schüler, Horst, Dr. et al
General Electric Praunheimer Landstrasse
50
D-6000 Frankfurt 90(DE)

(54) **Polymer mixture having an aromatic polycarbonate, polyester and flame retardant.**

(57) The invention relates to polymer mixtures which comprise an aromatic polycarbonate, a polyester and a flame retardant.

By the choice of certain flame retardants, namely a halogenated polyvinylaromatic compound or a halogenated polycyclic hydrocarbon compound, a polymer mixture is obtained which not only has good flame properties, but also has the following property :

articles injection-moulded from the polymer mixture according to the invention have a surface with reduced gloss.

EP 0 336 195 A2

## Polymer mixture having an aromatic polycarbonate, polyester and flame retardant

The invention relates to a polymer mixture having an aromatic polycarbonate, a polyester, and a flame retardant.

Polymer mixtures which comprise an aromatic polycarbonate, a polyester and a flame retardant are known per se. For this purpose reference may be made, for example, to EP-A-0229957.

Polymer mixtures which comprise an aromatic polycarbonate, a polyalkylene terephthalate, an agent which simultaneously reduces the gloss and improves the impact strength, and a flame retardant are disclosed in EP-A-0229957.

An olefinediene copolymer, for example, an EPDM or an acrylonitrile-butadiene-alkenyl aromatic copolymer is used as an agent to reduce the gloss and to improve the impact strength. A halogenated compound, notably a decabromodiphenyl oxide, a tetrabromobisphenol-A-bisphenol A copolymer or a tetrabromo-bisphenol-A-oligomer is used as a flame retardant.

The polymer mixture as described in EP-A-0229957 has a VO (flame-retarding rating) qualification at 1.6 mm, an IZOD notched impact strength of at least approximately 10 kgf.cm per cm and a surface gloss which is less than that of pure polycarbonate.

The invention provides polymer mixtures having similar properties in which, however, no special agents for reducing the surface gloss are necessary. The choice of the agent to improve the impact strength thus is wider.

The polymer mixture according to the invention is characterised in that the polymer mixture comprises as a flame retardant a halogenated polyvinyl aromatic compound or a halogenated, polycyclic hydrocarbon compound.

Polymer mixtures which comprise 60-85% by weight of polybutylene terephthalate, 5-20% by weight of brominated polystyrene, 5-25% by weight of polycarbonate and 5-15% by weight of an agent to improve the impact strength are described in the non-pre-published Netherlands Patent Application 8703130. These polymer mixtures have a good combination of flame-retarding properties and tracking resistance. These known polymer mixtures are excluded from the Claims of the present Patent Application.

The invention is based on the discovery that the above-mentioned flame retardants in polycarbonate-polyester mixtures not only lead to an improvement of the flame-retarding properties, but also to a reduction of the surface gloss of articles injection-moulded from the polymer mixture according to the invention.

The polymer mixture according to the invention is preferably composed so as to comprise 30-86 parts by weight of aromatic polycarbonate, 10-50 parts by weight of polyester and 4-20 parts by weight of the flame retardant, per 100 parts by weight of aromatic polycarbonate plus polyester plus flame retardant.

When the polymer mixture according to the invention comprises less than 30 parts by weight of aromatic polycarbonate, the mixture becomes brittle; with more than 86 parts by weight the flame-extinghuishing properties are insufficient. With less than 10 parts by weight of polyester the heat deformation temperature (HDT) becomes too high for many applications; with more than 50 parts by weight of polyester the mechanical properties are insufficient. Less than 4 parts by weight of the flame retardant results in polymer mixtures having insufficient flame-extinguishing properties; polymer mixtures having more than 20 parts by weight of the flame retardant show a corrosive behaviour.

The polymer mixture according to the invention preferably also comprises an agent to improve the impact strength, for example, preferably a polymer built up from a rubber-like core and one or more shells. The agent to improve the impact strength, if present, is preferably used in a quantity of 1-20 parts by weight per 100 parts by weight of aromatic polycarbonate plus polyester plus flame retardant.

If desired it is possible to incorporate in the polymer mixture according to the invention an agent to reduce the surface gloss.

The flame-retarding properties and the antidrip properties can be further improved by incorporating in the polymer mixture according to the invention an antimony oxide and/or a fluorinated polyolefin.

It is possible to incorporate conventional auxiliary substances in the polymer mixture according to the invention.

The polymer mixture according to the invention comprises at any rate the following constituents:

A. an aromatic polycarbonate and

B. a polyester and

C. a halogenated polyvinyl aromatic compound or a halogenated polycyclic hydrocarbon compound.

A. Aromatic polycarbonate

Aromatic polycarbonates are polymers known per se. They are generally prepared by reacting a dihydric phenol compound with a carbonate precursor, for example, phosgene, a halogen formiate or a carbonate ester. Aromatic polycarbonates are polymers which comprise units of the formula

$$--(-- O - A - O - \overset{\overset{\displaystyle O}{\parallel}}{C} --)--$$

wherein A is a bivalent aromatic radical derived from the dihydric phenol used in the preparation of the polymer. As dihydric phenols may be used in the preparation of the aromatic polycarbonates mononuclear or polynuclear aromatic compounds which comprise two hydroxy radicals each directly bonded to a carbon atom of an aromatic nucleus.

The branched polycarbonates known per se and described, for example, in US-A-4,001,184 are also suitable.

Suitable aromatic polycarbonates are also the so-called polyester carbonates which are obtained by performing the polymerisation reaction in the presence of an ester precursor, for example, a difunctional carboxylic acid, for example, terephthalic acid or an ester-forming derivative thereof. These polyester carbonates have ester compounds and carbonate compounds in the polymeric chain. Polyester carbonates are described, for example, in US-A-3,169,121.

B. Polyester

Polyalkylene phthalate esters are preferably used as a polyester in the polymer mixture according to the invention. Polyalkylene phthalate esters are to be understood to mean the condensation products of one or more diol compounds and one or more phthalic acids. Examples of suitable diol compounds are ethanediol, butanediol, hexanediol, cyclohexanedimethanol, diethylene glycol, triethylene glycol and ether diol compounds of the general formula $H - O \_ (CH_2)_n\text{-}O^H$. Suitable phthalic acids are terephthalic acid and isophthalic acid.

Up to 20 mol% of the diol compound in the polyalkylene phthalate ester which may be used in the polymer mixtures according to the invention may be replaced by, for example, aromatic diol compounds and/or unsaturated diol compounds and/or tri-ol or tetra-ol compounds. Up to 20 mol% of the phthalic acid may be replaced by other dicarboxylic acids, for example, aliphatic dicarboxylic acids, for example, adipic acid, 1,4-cyclohexanedicarboxylic acid.

Particularly suitable for the polymer mixtures according to the invention are the polyalkylene phthalate esters the alkylene units of which are derived from 1,4-butanediol for more than 80 mol% and the phthalate units of which are derived from terephthalic acid for more than 80 mol%. Suitable are polybutylene terephthalate esters having an intrinsic viscosity of 0.7 to 2.0, preferably 0.1-1.5 dl/g (measured in a 60/40 mixture of phenol/tetrachloroethane at 25° C).

Also suitable are copolyesters derived from a diol consisting of 1,4-cyclohexanedimethanol and/or ethylene glycol and from a phthalic acid consisting of terephthalic acid or a mixture of isophthalic acid and terephthalic acid.

It is further possible to use a mixture of two or more polyalkylene phthalate esters.

C. Halogenated polyvinyl aromatic compound or halogenated, polycyclic hydrocarbon compound

The polymer mixture according to the invention comprises as a flame retardant at least one of the halogen-containing compounds mentioned hereinbefore. These are known flame-retarding agents for synthetic resins. However, it was not known that these agents can reduce the gloss of articles manufactured from polycarbonate-polyester mixtures. Suitable halogenated polyvinylaromatic compounds are, for example, brominated polystyrenes. These products are commercially available. As halogenated, polycyclic products may be mentioned, for example, dodecachloro-dodecahydro-dimethano-dibenzo -cyclo octane, hexachlorocyclopentadiene, 5,5-dimethoxy-tetrachlorocyclopentadiene and hexabromocyclopentadiene.

The polymer mixture according to the invention comprises, in addition to the constituents mentioned

3

hereinbefore, preferably also an agent to improve the impact strength.

Any known agent to improve the impact strength of polymer mixtures which comprise an aromatic polycarbonate and a polyalkylene terephthalate may be used in the polymer mixture according to the invention.

As an agent to improve the impact strength is preferably used in the polymer mixture according to the invention a core-shell polymer prepared in several steps and consisting of a rubber-like core on which one or more shells have been grafted. The rubber-like core may be built up from rubber-like polyacrylates, or from rubber-like polydienes, for example, polybutadiene. The rubber-like core may comprise comonomers, for example, styrenes, acrylonitrile. Monomers have been grafted on the core, for example, acrylates and/or styrene compounds and/or acrylonitrile.

It is possible to add to the polymer mixture according to the invention an agent to reduce the surface gloss. In general this will not be necessary. However, such agents may contribute to a further reduction of the gloss whenever this should be necessary. Any known agent to reduce the gloss of synthetic resins, for example, inorganic compounds and polymer additives, may be used. Suitable polymer additives have been described, for example, in DE-A-2439542.

In addition to the constituents mentioned hereinbefore the polymer mixture according to the invention may comprise one or more of the constituents known for polycarbonate-polyester, for example, a polyolefin, one or more stabilisers, dyes, pigments, reinforcing fibres, for example, glass fibres and release agents.

The polymer mixture according to the invention can be obtained according to known techniques, for example, by mixing the constituents together in the melt. The constituents are preferably compounded in an extruder.

## EXAMPLES

The following constituents were used in the examples.

PC:         an aromatic polycarbonate derived from bisphe-
            nol A and phosgene, having an intrinsic visco-
            sity of 49 ml/g, measured in methylene
            chloride at 25°C.

PBT:        a polybutylene terephthalate polyester having
            an intrinsic viscosity of 86 ml/g, measured in
            a 60/40 phenol/tetrachloroethane mixture at 25°C.

PET:        a polyethylene terephthalate polyester having
            an intrinsic viscosity of 73 ml/g, measured in
            a 60/40 phenol/tetrachloroethane mixture at 30°C.

JM:         an agent to improve the impact strength built
            up from a rubber-like core consisting substan-
            tially of a butadiene rubber and a shell con-
            sisting substantially of methacrylate and styrene.

PE:         polyethylene

ST:         a mixture of several stabilisers.

KS1:        carbon black.

KS2:        a 100:1 mixture of titanium dioxide and carbon
            black.

4

FR1: a commercially available halogenated poly-vinylaromatic compound, namely a brominated polystyrene having a bromine content of 68.5% by weight and a softening-point of approximately 220°C.

FR2: a commercially available halogenated poly-cyclic hydrocarbon compound namely dodecachloro-dodecahydro-dimethano-dibenzo--cyclo-octane.

FR3: a copolymer of brominated bisphenol A - bisphenol and phosgene, mixed with $Sb_2O_3$ and EVA (ratio 67/20/13).

AD: a mixture of $Sb_2O_3$ and EVA (85/15).

T: a fluorinated polyolefin commercially available under the tradename Teflon®.

MA: a commercially available copolymer additive to reduce the gloss, built up substantially from units derived from methylmethacrylate and styrene, according to DE-A-2439542.

The constituents were compounded in an extruder adjusted at an average adjusting temperature of 235°C in the quantities as indicated in the table hereinafter. The resulting extrudate was chopped to pellets. Test pieces were manufactured from the pellets (by injection moulding) to determine the notch impact value, according to Izod, the gloss, the flame-retarding properties according to UL 94. The gloss was determined according to ASTM D 523-85, at an angle of 60°.

The results obtained are also recorded in the table hereinafter.

TABLE

| Example | A | B | C | I | II | III | IV | V | VI | VII |
|---|---|---|---|---|---|---|---|---|---|---|
| Composition (parts by weight) | | | | | | | | | | |
| . PC | 77.5 | 48.3 | 68.5 | 62.4 | 57.4 | 63.1 | 56.1 | 66.4 | 53.4 | 48.4 |
| . PBT | 15 | - | - | 15 | 15 | 15 | 15 | 15 | - | - |
| . PET | - | 21 | 21 | - | - | - | - | - | 21 | 21 |
| . IM | 4 | 7 | 7 | 4 | 4 | 4 | 4 | 4 | 7 | 7 |
| . PE | 2 | 2 | 2 | 2 | 2 | 2 | 2 | 2 | 2 | 2 |
| . ST | 0.6 | 0.5 | 0.6 | 0.6 | 0.6 | 0.6 | 0.6 | 0.6 | 0.6 | 0.6 |
| . KS1 | 0.9 | 0.9 | 0.9 | 0.9 | 0.9 | - | - | - | 0.9 | 0.9 |
| . KS2 | - | - | - | - | - | 1.0 | 1.0 | 1.0 | - | - |
| . FR1 | - | - | - | 11 | 11 | - | 11 | 11 | 11 | 11 |
| . FR2 | - | - | - | - | - | 14 | - | - | - | - |
| . FR3 | - | 20 | - | - | - | - | - | - | - | - |
| . AD | - | - | - | 3.5 | 3.5 | - | - | - | 3.5 | 3.5 |
| . T | - | 0.3 | - | 0.6 | 0.6 | 0.3 | 0.3 | - | 0.6 | 0.6 |
| . MA | - | - | - | - | 5 | - | 10 | - | - | 5 |
| Properties | | | | | | | | | | |
| Notch impact value J/m | 657 | 538 | >600 | 393 | 150 | 493 | 243 | 499 | 498 | 146 |
| 60° (%) | 100 | 100 | 100 | 85 | 77 | 78 | 52 | 72 | 87 | 71 |
| Gloss | | | | | | | | | | |
| SE 1.6 mm | - | VO | - | VO | VO | V1 | V2 | V2 | VO | VO |
| 1.0 mm | - | - | - | - | - | V1 | V2 | VO | - | - |

It may be seen from the results of the table that the addition of the flame retardants according to the invention (FR1 and FR2) not only leads to improvement of the flame extinction, but also to reduction of the gloss.

This effect is not obtained with the addition of FR3.

A further reduction of the gloss can be achieved by the addition of a copolymer additive (MA).

**Claims**

1. A polymer mixture which comprises an aromatic polycarbonate, a polyester and a flame retardant, characterised in that the polymer mixture comprises as a flame retardant a halogenated polyvinylaromatic compound or a halogenated polycyclic hydrocarbon compound.

2. A polymer mixture as claimed in Claim 1, characterised in that the polymer mixture comprises in addition an agent to improve the impact strength.

3 A polymer mixture as claimed in Claim 2, characterised in that the polymer mixture comprises as an agent to improve the impact strength a polymer built up from a rubber-like core and one or more shells.

4. A polymer mixture as claimed in Claim 1, characterised in that the polymer mixture moreover comprises an agent to reduce the surface gloss.

5. A polymer mixture as claimed in Claim 1, characterised in that the polymer mixture moreover comprises an antimony oxide and/or a fluorinated polyolefin.

6. A polymer mixture as claimed in Claim 1, characterised in that the polymer mixture moreover comprises one or more of the following constituents:

   a. an agent to improve the impact strength and/or

   b. a polyolefin and/or

   c. one or more stabilisers and/or

   d. dyes and/or pigments and/or

   e. reinforcing fibres and/or

   f. a release agent.

6

7. A polymer mixture as claimed in Claim 1, characterised in that the polymer mixture comprises 30-86 parts by weight of aromatic polycarbonate and 10-50 parts by weight of polyester and 4-20 parts by weight of flame retardant per 100 parts by weight of aromatic polycarbonate plus polyester plus flame retardant.

8. A polymer mixture as claimed in Claim 7, characterised in that the polymer mixture comprises 1-20 parts by weight of an agent to improve the impact strength per 100 parts by weight of aromatic polycarbonate plus polyester plus flame retardant.

7